(19) Europäisches Patentamt / European Patent Office / Office européen des brevets

(11) **EP 2 396 527 B1**

(12) **FASCICULE DE BREVET EUROPEEN**

(45) Date de publication et mention
de la délivrance du brevet:
**20.03.2013 Bulletin 2013/12**

(21) Numéro de dépôt: **10706022.0**

(22) Date de dépôt: **15.01.2010**

(51) Int Cl.:
*F02C 9/52* *(2006.01)*       *F02C 9/54* *(2006.01)*

(86) Numéro de dépôt international:
**PCT/FR2010/050061**

(87) Numéro de publication internationale:
**WO 2010/092268 (19.08.2010 Gazette 2010/33)**

(54) **PROCEDE ET SYSTEME DE REGULATION DE TURBINE A GAZ**

VERFAHREN UND SYSTEM ZUR REGELUNG EINER GASTURBINE

METHOD AND SYSTEM FOR CONTROLLING A GAS TURBINE

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **16.02.2009 FR 0950986**

(43) Date de publication de la demande:
**21.12.2011 Bulletin 2011/51**

(73) Titulaire: **Snecma**
**75015 Paris (FR)**

(72) Inventeur: **AUROUSSEAU, Christian**
**F-77950 Rubelles (FR)**

(74) Mandataire: **Joly, Jean-Jacques et al
Cabinet Beau de Loménie
158, rue de l'Université
75340 Paris cedex 07 (FR)**

(56) Documents cités:
**EP-A- 0 427 952       WO-A-2009/109446
DE-A1- 10 322 703       US-A- 3 797 233**

**Description**

Arrière-plan de l'invention

L'invention concerne la régulation de turbine à gaz, en particulier, mais non exclusivement de turbine à gaz pour moteur aéronautique, notamment turbo-réacteur.

Dans un turbo-réacteur, plusieurs boucles de régulation sont prévues, notamment :

- une boucle de régulation principale pour asservir le régime du turbo-réacteur à un régime de consigne fonction de la poussée souhaitée, par action sur le débit de carburant amené à la chambre de combustion de la turbine à gaz, et
- des boucles de régulation locales pour asservir la position de parties de géométrie variable.

Dans un turbo-réacteur à plusieurs corps, par exemple avec un corps (compresseur et turbine) basse-pression (BP) et un corps haute-pression (HP), la grandeur asservie par la boucle de régulation principale peut être la vitesse de rotation NBP de l'arbre reliant la turbine BP au compresseur BP. Une autre grandeur peut être utilisée, notamment le rapport de pression moteur ou EPR ("Engine Pressure Ratio"), c'est-à-dire le rapport entre la pression en entrée du compresseur BP (ou soufflante) et la pression en sortie du compresseur BP (ou soufflante).

Les parties de géométrie variable, ci-après désignées aussi par "géométries variables" ont des positions asservies à des valeurs de consigne en fonction du régime, éventuellement réduit, du turbo-réacteur ou lors de phases transitoires (passage d'un régime à un autre). Des exemples bien connus de géométries variables sont les ensembles d'aubes de stator de compresseur à angle de calage variable, ou VSV ("Variable Stator Vanes"), des vannes de prélèvement d'air pour décharge du compresseur, ou VBV ("Variable Bleed Vanes") qui sont commandées pendant toute la durée de fonctionnement en vol du turbo-réacteur, ou encore des vannes de prélèvement d'air pour décharge transitoire du compresseur, ou TBV ("Transcient Bleed Vanes") qui sont commandées lors de phases particulières du vol.

Pour assurer un fonctionnement sain du turbo-réacteur, pour éviter notamment des décrochages du compresseur, des extinctions de la combustion ou des sur-vitesses, des seuils sont introduits dans la boucle de régulation principale qui limitent l'augmentation ou la diminution du débit de carburant lors d'un changement de régime demandé au turbo-réacteur, comme il est divulgué, par exemple, dans le document WO 2009-109446. Ces seuils sont calculés en fonction de l'état thermodynamique estimé du turbo-réacteur à l'instant du changement de régime. Or, dans certaines circonstances, et en particulier lors de transitions successives entre régimes, un écart significatif peut exister entre l'état thermodynamique estimé du turbo-réacteur et son état réel, ce qui impose de prendre une marge supplémentaire sur les seuils calculés ou sur le dimensionnement du compresseur.

Objet et résumé de l'invention

L'invention a pour but de remédier à l'inconvénient précité et propose à cet effet, selon un premier aspect, un procédé de régulation d'une turbine à gaz ayant un ensemble compresseur avec au moins une partie de géométrie variable, une chambre de combustion et un ensemble turbine, le procédé comprenant :

- l'élaboration d'une consigne de débit de carburant à amener à la chambre de combustion en fonction d'un régime souhaité de la turbine à gaz,
- le calcul de valeurs de seuil pour maintenir la valeur de consigne de débit de carburant supérieure ou égale à une valeur limite minimale et inférieure ou égale à une valeur limite maximale, les valeurs de seuil étant fonction d'un état thermodynamique de la turbine à gaz, et
- l'asservissement de la position de la partie de géométrie variable par commande d'un actionneur en fonction de l'écart entre une information de position détectée représentative de la position instantanée de la partie à géométrie variable et une information de position de consigne,
  procédé dans lequel, selon l'invention,
- les valeurs de seuil calculées sont des valeurs de richesse C/P où C est le débit de carburant à amener à la chambre de combustion et P est la pression en sortie de l'ensemble compresseur, et
- les valeurs de seuil sont ajustées automatiquement par calcul en temps réel en fonction de l'information de position détectée représentative de la position instantanée de la partie de géométrie variable ou de l'écart entre cette information de position détectée et l'information de position de consigne.

Ainsi l'invention est remarquable en ce que la prise en compte d'une information représentant la position réelle de la géométrie variable permet de s'approcher au mieux de l'état thermodynamique réel instantané du turbo-réacteur pour calculer des seuils de façon optimale.

Par conséquent :

EP 2 396 527 B1

- à performances équivalentes de l'ensemble compresseur et de la régulation, le temps d'accélération peut être amélioré et les risques de décrochage diminués lors d'une transition vers un régime plus élevé, ou
- à performances équivalentes de la régulation, l'ensemble compresseur peut être optimisé en réduisant la marge au décrochage, d'où une diminution de masse, ou
- à performances équivalentes de l'ensemble compresseur, une plus grande tolérance peut être admise sur les spécifications de la régulation.

Selon un mode de mise en oeuvre du procédé, les valeurs de seuil sont calculées en fonction d'un état thermodynamique de la turbine à gaz auquel correspond la position de consigne de la partie de géométrie variable et sont corrigées en temps réel en fonction de l'écart entre la position détectée et la position de consigne de la partie de géométrie variable.

Selon un autre mode de mise en oeuvre du procédé, les valeurs de seuil sont calculées en fonction d'un état thermodynamique de la turbine à gaz en prenant en compte directement la position détectée de la partie de géométrie variable.

La partie de géométrie variable peut être l'une au moins parmi un ensemble d'aubes de stator à angle de calage variable et des vannes de prélèvement d'air dans l'ensemble compresseur.

Selon un deuxième aspect de l'invention, celle-ci vise un système de régulation d'une turbine à gaz ayant un ensemble compresseur avec au moins une partie de géométrie variable, une chambre de combustion et un ensemble turbine, le système de régulation comprenant :

- un circuit d'élaboration d'une consigne de débit de carburant à amener à la chambre de combustion en fonction d'un régime souhaité de la turbine à gaz, le circuit d'élaboration de la consigne de débit de carburant comprenant un circuit de calcul de valeurs de seuil pour maintenir la valeur de consigne de débit de carburant supérieure ou égale à une valeur limite minimale et inférieure ou égale à une valeur limite maximale, et
- un circuit d'asservissement de position de la partie de géométrie variable comprenant un capteur de position pour fournir une information représentative d'une position détectée de la partie de géométrie variable, un actionneur agissant sur la partie de géométrie variable pour commander sa position et un circuit de commande de l'actionneur pour asservir la position de la partie de géométrie variable à une position de consigne,

système de régulation dans lequel, selon l'invention, le circuit de calcul de valeurs de seuil st agencé pour calculer des valeurs de seuil de richesse C/P où C est le débit de carburant à amener à la chambre de combustion et P est la pression en sortie de l'ensemble compresseur et est relié au circuit d'asservissement de la position de la partie de géométrie variable pour ajuster les valeurs de seuil automatiquement par calcul en temps réel en fonction de la position détectée de la partie de géométrie variable ou de l'écart entre la position détectée et la position de consigne.

Selon un mode de réalisation, le circuit de calcul de valeurs de seuil est agencé pour calculer des valeurs de seuil en fonction d'un état thermodynamique de la turbine à gaz auquel correspond une position de consigne de la partie de géométrie variable et pour corriger les valeurs de seuil calculées en fonction de l'écart entre la position détectée et la position de consigne de la partie de géométrie variable.

Selon un autre mode de réalisation, le circuit de calcul de valeurs de seuil est agencé pour calculer des valeurs de seuil en fonction d'un état thermodynamique de la turbine à gaz en prenant en compte directement la position détectée de la partie de géométrie variable.

Selon une particularité du système de régulation, le circuit de calcul de valeurs de seuil est relié au moins à un circuit d'asservissement de position d'une partie de géométrie variable choisie parmi un ensemble d'aubes de stators à angle de calage variable et des vannes de prélèvement d'air dans l'ensemble compresseur.

Selon encore un autre de ses aspects, l'invention a pour objet une turbine à gaz, notamment un turbo-réacteur d'avion, muni d'un système de régulation tel que défini plus haut.

Brève description des dessins

L'invention sera mieux comprise à la lecture de la description faite ci-après, à titre indicatif mais non limitatif, en référence aux dessins annexés, sur lesquels :

- la figure 1 montre très schématiquement un turbo-réacteur d'avion ;
- la figure 2 montre un schéma d'un système de régulation de turbo-réacteur selon l'art antérieur ;
- les figures 3 et 4 sont des courbes montrant l'évolution du débit de carburant et d'une grandeur représentative de la richesse du mélange carburant/air (C/P) en fonction du régime (ou du régime réduit) ; et
- la figure 5 représente la variation de l'angle de calage d'aubes stator à angle de calage variable dans un compresseur, en fonction de $N/\sqrt{T}$ où N est la vitesse de rotation de l'arbre d'entraînement du compresseur et T la température en entrée du compresseur ; et

- les figures 6 et 7 sont des schémas d'un système de régulation de turbo-réacteur selon un premier et un deuxième modes de réalisation de l'invention.

Description détaillée de modes de réalisation de l'invention

Dans la description qui suit, on se place dans le cadre de l'application à des turbo-réacteurs d'avion. L'invention est toutefois applicable à d'autres types de turbines à gaz aéronautiques, telles que turbines d'hélicoptère, ou à des turbines industrielles.

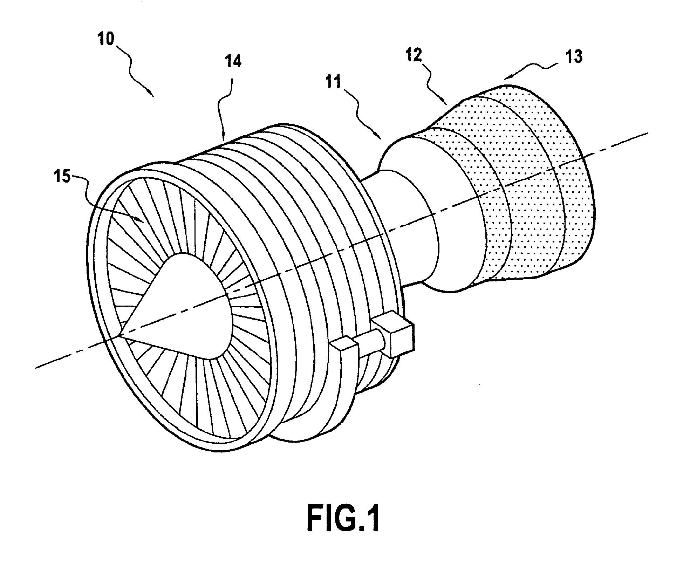

La figure 1 montre de façon très schématique un turbo-réacteur 10 à double corps pour un avion. Le turbo-réacteur 10 comprend une chambre de combustion 11 munie d'injecteurs, les gaz de combustion issus de la chambre 11 entraînant une turbine HP 12 et une turbine BP 13. La turbine HP 12 est couplée par un arbre HP à un compresseur HP 14 alimentant la chambre de combustion 11 en air sous pression tandis que la turbine BP 13 est couplée par un arbre BP à une soufflante 15 en entrée du turbo-réacteur.

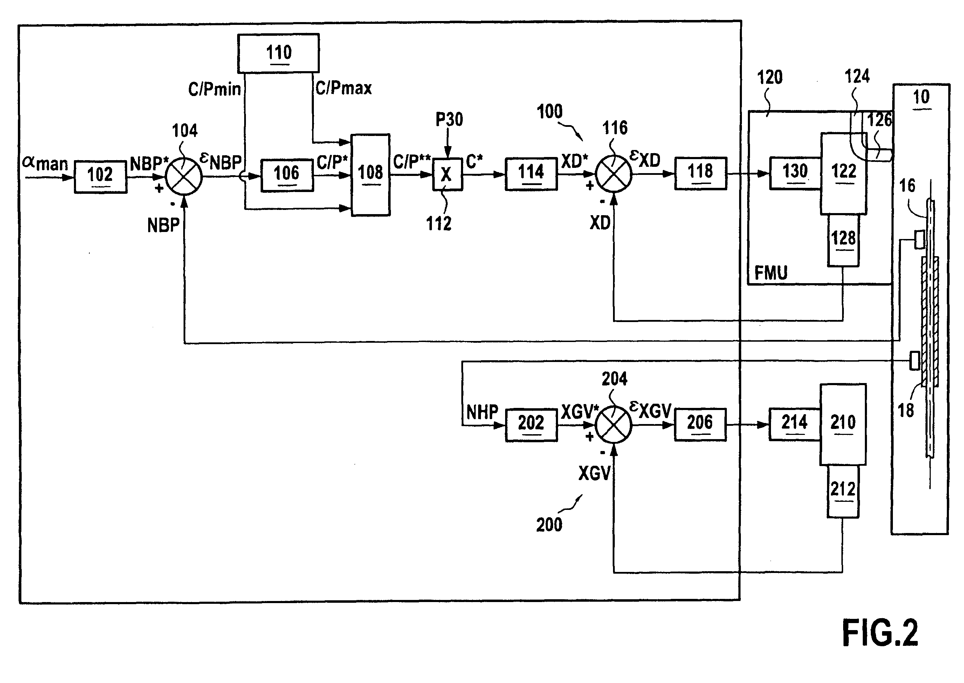

Un mode de réalisation d'un système de régulation selon l'art antérieur est montré schématiquement par la figure 2.

Le système de régulation comprend une boucle de régulation principale 100 pour asservir le régime du turbo-réacteur à une valeur correspondant à une poussée désirée. Dans l'exemple illustré, la grandeur asservie est la vitesse de rotation NBP de l'arbre BP 16.

La boucle de régulation principale comprend un générateur de fonction 102 qui reçoit une information de consigne de poussée traduite habituellement par un angle de manette de gaz $\alpha_{man}$ et qui transforme cette information en valeur de consigne de régime NBP* de la vitesse de l'arbre BP.

Un capteur (non représenté) fournit une information représentative de la valeur réelle instantanée NBP de l'arbre BP. Un comparateur 104 fournit un signal d'écart $\varepsilon$NBP dont le signe et l'amplitude reflètent la valeur réelle de la différence entre NBP* et NBP.

L'écart $\varepsilon$NBP est transformé par un circuit correcteur 106 de type P.I.D. (Proportionnel Intégral et Différentiel) en valeur représentative de richesse de consigne (C/P)*, où C est le débit de carburant à amener à la chambre de carburant et P est la pression en sortie de l'ensemble compresseur. La pression P étant sensiblement celle régnant dans la chambre de combustion, laquelle est représentative du débit d'air amené dans la chambre, la valeur C/P est représentative de la richesse du mélange carburant/air (rapport entre le débit de carburant et le débit d'air amenés à la chambre de combustion).

Un circuit de seuillage 108 reçoit la valeur C/P de consigne, (C/P)*, ainsi que des valeurs de butée ou seuil maximum C/P$_{max}$ pour la grandeur C/P et de butée ou seuil minimum C/P$_{min}$ pour cette même grandeur. Les seuils C/P$_{max}$ et C/P$_{min}$ sont fournis par un circuit de calcul 110 par exemple intégré au circuit de régulation moteur ECU (Engine Control Unit) du turbo-réacteur.

Le circuit 108 délivre une valeur de consigne seuillée (C/P)** telle que :

$$\text{(C/P)** = (C/P)* si (C/P)*} \leq \text{C/P}_{max} \text{ et (C/P)*} \geq \text{C/P}_{min}$$

$$\text{(C/P)** = C/P}_{max} \text{ si (C/P)* > C/P}_{max}$$

et

$$\text{(C/P)** = C/P}_{min} \text{ si (C/P)* < C/P}_{min}.$$

Un circuit 112 reçoit la valeur de consigne seuillée (C/P)** et une information représentative de la pression P30 en sortie de compresseur HP et fournit grandeur de consigne de débit de carburant C* afin de commander un doseur 122 d'un circuit 120 de commande de débit carburant ou FMU ("Fuel Metering Unit") pour délivrer à la chambre de combustion un débit de carburant correspondant à la consigne C*.

Le doseur 122 est habituellement un doseur à différence de pression constante entre son entrée reliée à une conduite 124 d'alimentation en carburant sous pression et sa sortie reliée par une conduite 126 aux injecteurs de la chambre de combustion du turbo-réacteur, et le débit délivré est proportionnel à la position d'un organe mobile du doseur. Un générateur de fonction 114 transforme la valeur de consigne C* en valeur de consigne de position XD*. Un comparateur 116 reçoit la valeur de consigne de position XD* et une valeur de position réelle XD fournie par un capteur de position 128 associé au doseur et élabore l'écart εXD entre XD* et XD. Un circuit correcteur 118 de type PID reçoit l'écart εXD et génère une grandeur réprésentant l'intensité du courant de commande d'une servo-valve 130 l'associée au doseur 122 afin d'amener celui-ci dans la position voulue, ce qui devrait par conséquent amener le débit carburant à la valeur souhaitée C*.

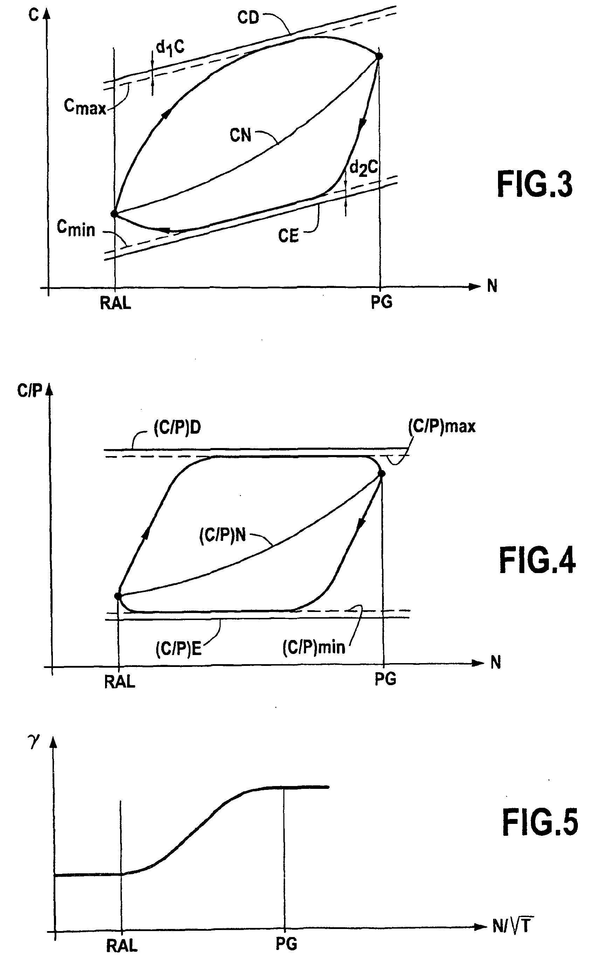

La figure 3 montre la variation du débit carburant C en fonction du régime N du turbo-réacteur.

Sur la figure 3, tes courbes CD et CE représentent les lignes de décrochage du compresseur et d'extinction pauvre. La courbe $C_{max}$ représente le seuil maximum de valeur de débit et est sensiblement parallèle à la courbe CD en se situant en dessous de celle-ci pour laisser une marge de sécurité $d_1C$. La courbe $C_{min}$ représente le seuil minimum de valeur de débit et est sensiblement parallèle à la courbe CE en se situant au-dessus de celle-ci pour laisser une marge de sécurité $d_2C$.

Lors du passage d'un régime ralenti RAL à un régime PG, le débit carburant croît initialement fortement jusqu'à rencontrer la courbe $C_{max}$ et suit celle-ci avant d'atteindre la valeur correspondant au régime PG. A l'inverse, lors du passage du régime PG au régime RAL, le débit carburant diminue initialement fortement jusqu'à rencontrer la courbe $C_{min}$ et suit celle-ci avant d'atteindre la valeur correspondant au régime RAL.

La courbe CN représente la valeur de débit en régime stabilisé.

La figure 4 montre de façon similaire la variation de la grandeur C/P en fonction du régime N du turbo-réacteur.

La courbe (C/P)N représente la valeur en régime stabilisé. On note qu'elle est ici constante, représentant un invariant du turbo-réacteur.

Les courbes (C/P)D et (C/P)E représentent les lignes de décrochage du compresseur et d'extinction pauvre et les lignes $(C/P)_{max}$ et $(C/P)_{min}$ les valeurs de butées ou de seuils maximum et minimum de C/P.

La variation de C/P en régime transitoire du régime RAL au régime PG et inversement est également représentée.

Pour un turbo-réacteur donné, les valeurs de seuil $(C/P)_{max}$ et $(C/P)_{min}$ sont fonction d'un certain nombre de paramètres.

Ainsi $(C/P)_{max}$ est fonction de la vitesse de rotation NHP de l'arbre reliant la turbine HP au compresseur HP, de la température T25 en entrée du compresseur HP, de la pression $P_i$ en entrée du compresseur, de l'incidence i (angle entre l'axe de l'avion et la direction de déplacement), de l'angle de dérapage avion, de valeurs maximales admissibles prédéterminées notamment pour NHP, NBP, P30, et la température T50 en sortie de la turbine BP, en tenant compte de la position qui doit être celle des géométries variables pour le régime considéré du turbo-réacteur.

De façon similaire, $(C/P)_{min}$ est fonction de la vitesse NHP, de la température T25, de la pression P30 et de valeurs minimales admissibles notamment par NHP, NBP, P30, en tenant compte de la position qui doit être celle des géométries variables pour le régime considéré.

Afin d'alléger les opérations de calcul en temps réel en vol, les valeurs de $(C/P)_{max}$ et $(C/P)_{min}$ sont calculées par le circuit 110 sous la forme :

$$(C/P)_{max} = F_1 (N, T, P_i, i, ...)$$

$$(C/P)_{min} = F_2 (N, T, P_i, i, ...)$$

où N est la valeur instantanée de NHP, T la valeur instantanée de T25, $P_i$ est la valeur instantanée de la pression en entrée du moteur et i l'incidence, valeurs fournies par des capteurs, les fonctions $F_1$, $F_2$ intégrant déjà les autres paramètres invariants du turbo-réacteur, dont les positions de consigne des GV pour le régime en cours.

La détermination des valeurs de seuil $(C/P)_{max}$ et $(C/P)_{min}$ en fonction de caractéristiques des compresseurs et de caractéristiques thermodynamiques du moteur est réalisée de façon connue en soi.

La détermination des valeurs de seuil (C/P)max (protégeant principalement du décrochage compresseur) est faite par calcul théorique lors du dimensionnement du compresseur où il est calculé la caractéristique de décrochage

$Psortie/Pentrée = F(N/\sqrt{T})$ du compresseur, caractéristique validée ensuite par essais du compresseur. Cette caractéristique est retranscrite dans un champ pouvant être exploité par le circuit de régulation, à savoir

$C/P = F(N/\sqrt{T})$, le circuit de régulation disposant de ces paramètres N, C, P, T, et peut ensuite être confirmée et mise au point par des essais sur moteur.

La détermination des valeurs de seuil (C/P)min (protégeant principalement de l'extinction pauvre du moteur) est faite par calcul théorique lors du dimensionnement de la chambre de combustion où il est calculé la caractéristique d'extinction de la chambre débit carburant C /débit d'air, caractéristique validée ensuite par des essais de chambre. Cette caractéristique est retranscrite dans un champ pouvant être exploité par le circuit de régulation, à savoir C/P = F(N), le circuit de régulation disposant de ces paramètres N, C, P et peut ensuite être confirmée et mise au point par des essais sur moteur.

Ces valeurs de seuil sont traduites habituellement dans des réseaux de courbes ou dans des équations pour être traitées par le circuit de régulation moteur.

Le système de régulation de la figure 2 comprend aussi au moins une boucle de régulation locale 200 de géométrie variable 210, par exemple une boucle de régulation de l'angle de calage d'aubes de stator de compresseur HP à angle de calage variable, permettant d'adapter les déviations du flux d'air dans le compresseur HP au régime du turbo-réacteur.

La position de la géométrie variable est ici asservie à la vitesse NHP de l'arbre HP 18.

Un générateur de fonction 202 reçoit une grandeur représentative de NHP fournie par un capteur de vitesse et élabore une valeur de consigne XGV* pour la position de la géométrie variable. Dans le cas d'aubes de compresseur à angle de calage variable, la valeur de consigne de l'angle de calage y varie comme indiqué sur la figure 5 en fonction de $N/\sqrt{T}$ où N est la vitesse de rotation de l'arbre d'entraînement du compresseur et T la température en entrée de celui-ci. Ici, N = NHP et T = T25. Le générateur de fonction 202 reçoit donc également une information représentative de la température T25.

Un capteur de position 212 fournit une grandeur XGV représentative de la position réelle de la géométrie variable 210. Le capteur de position 212 est par exemple associé à un actionneur à vérin commandant la position de la géométrie variable 210.

Un comparateur 204 reçoit les grandeurs XGV* et XGV et fournit à un circuit correcteur 206 par exemple de type PID une valeur εXGV représentative de la différence entre XGV* et XGV.

Le circuit correcteur 206 élabore une grandeur représentant l'intensité du courant de commande d'une servo-valve 214 associée à l'actionneur de la géométrie variable de manière à amener la position de celle-ci à la valeur de consigne.

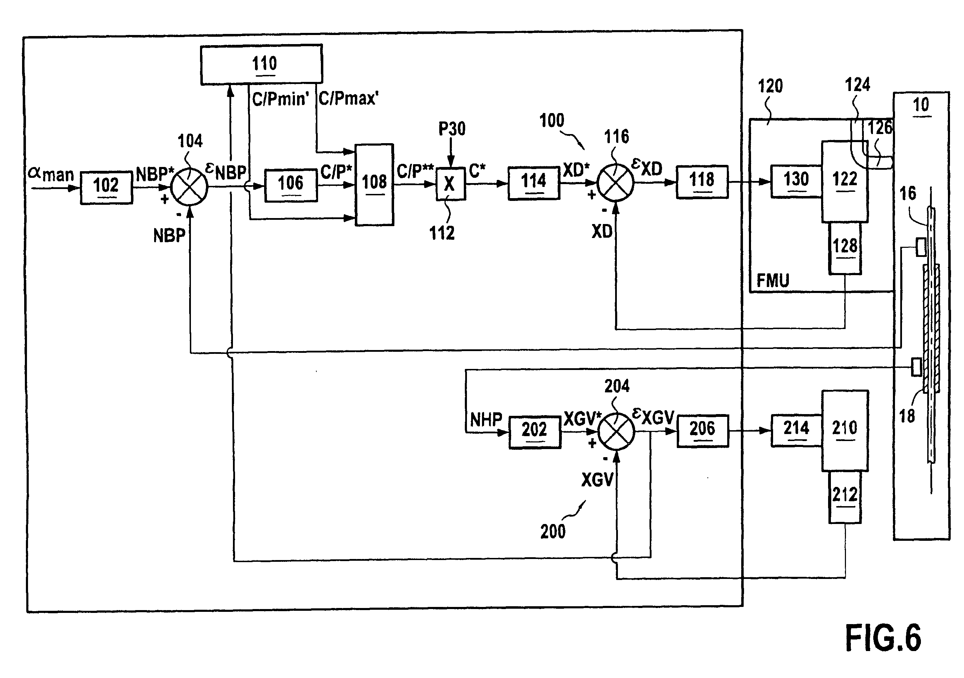

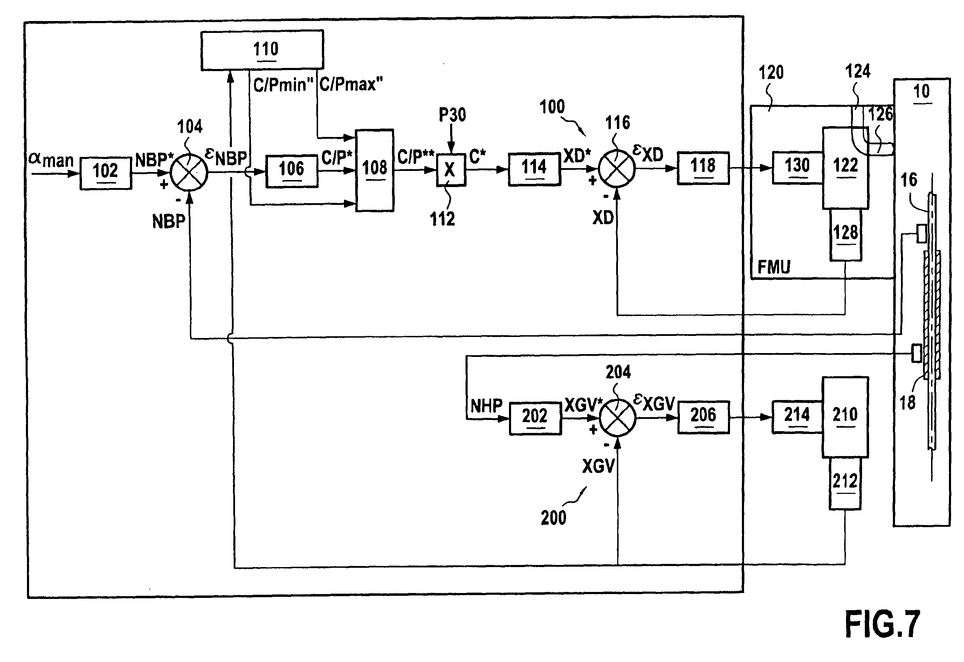

Les figures 6 et 7 illustrent deux modes de réalisation d'un système de régulation selon l'invention.

Sur les figures 6 et 7, les éléments communs avec ceux du système de régulation de la figure 2 portent les mêmes références et ne seront pas à nouveau décrits en détail.

Le système de régulation de la figure 6 se distingue de celui de la figure 2 en ce que le circuit 110 de calcul des seuils maximum et minimum de C/P est relié à la sortie du comparateur 204 pour recevoir une information représentative de l'écart εXGV entre position de consigne et position réelle de la géométrie variable, écart qui peut être très significatif et perturbant en régime transitoire.

La valeur de seuil maximum de C/P fournie au circuit de seuillage 108 est alors une valeur modifiée $(C/P)_{max'}$ calculée automatiquement en temps réel telle que :

$(C/P)_{max'} = (C/P)_{max} + k_1{}^*εXGV$, où $(C/P)_{max}$ est calculée comme indiqué en référence à la Figure 2 et $k_1$ est un facteur de correction qui représente le coefficient d'influence de la position de la géométrie variable considérée sur la ligne de décrochage.

De même, la valeur de seuil minimum de C/P fournie au circuit de seuillage 108 est alors une valeur modifiée $(C/P)_{min'}$ calculée automatiquement en temps réel telle que :

$(C/P)_{min'} = (C/P)_{min} + k_2{}^*εXGV$, où $(C/P)_{min}$ est calculée comme indiqué en référence à la Figure 2 et $k_2$ est un facteur de correction qui représente le coefficient d'influence de la position de la géométrie variable considérée sur la ligne d'extinction pauvre.

$k_1$ et $k_2$ pourront être positifs ou négatifs.

k1 est déterminé en recherchant la ligne de décrochage (C/P)1 à un angle de géométrie donné ang1 puis la ligne de décrochage (C/P)2 à un autre angle de géométrie ang2 pour en définir l'influence :

$$k1 = [(C/P)2-(C/P)1] / [ ang2-ang1]$$

k2 est déterminé en recherchant la ligne d'extinction (C/P)1' à un angle de géométrie donné ang1' puis la ligne d'extinction (C/P)2' à un autre angle de géométrie ang2' pour en définir l'influence :

$$k2 = [(C/P)2'-(C/P)1'] / [ ang2'-ang1'$$

Le système de régulation de la figure 7 se distingue de celui de la figure 2 en ce que le circuit 110 de calcul des seuils maximum et minimum de C/P est relié au capteur de position 212 pour recevoir l'information représentative de la position réelle XGV de la géométrie variable.

Le circuit de calcul 110 élabore automatiquement par calcul en temps réel des valeurs de seuil maximum $(C/P)_{max"}$ et minimum $(C/P)_{min"}$ sous la forme :

$$(C/P)_{max"} = F'_1 (N, T, P, ..., XGV)$$

$$(C/P)_{min"} = F'_2 (N, T, P, ..., XGV)$$

où $F'_1$ et $F'_2$ se distinguent des fonctions $F_1$ et $F_2$ en ce qu'elles intègrent les paramètres invariants du turbo-réacteur avec les positions des GV à l'instant considéré (et non leurs consignes).

Pour la détermination des valeurs de seuil $(C/P)_{max"}$ et $(C/P)_{min"}$ et leur traduction, on procède de façon analogue à la détermination et à la traduction des valeurs de seuil $(C/P)_{max}$ et $(C/P)_{min}$.

Dans les modes de réalisation des figures 6 et 7, il est tenu compte de la position réelle d'une géométrie variable. Toutefois, selon l'influence qu'elles peuvent avoir, on pourra prendre en compte les positions réelles de plusieurs géométries variables en fournissant au circuit de calcul 110 des informations représentatives des écarts entre position de consigne et position réelle ou représentatives des positions réelles pour les différentes géométries variables.

L'invention est remarquable en ce qu'elle permet une meilleure prise en compte de l'état thermodynamique réel du turbo-réacteur pour optimiser les valeurs de seuil.

Pour un compresseur donné, par rapport à l'art antérieur, le risque de décrochage ou d'extinction lié à une prise en compte erronée de l'état thermodynamique du turbo-réacteur est diminué et les temps d'accélération au changement de régime peuvent être améliorés.

Une autre possibilité offerte est de réduire la marge par rapport à la ligne de décrochage, donc d'optimiser la réalisation du compresseur.

D'autres possibilités offertes sont, pour un compresseur donné, d'accepter des performances moindres des asservissements de géométries variables, permettant un dimensionnement et une masse réduits, ou de permettre un accroissement de la robustesse aux pannes puisqu'en cas de panne, consigne et position sont différentes.

**Revendications**

1. Procédé de régulation d'une turbine à gaz (10) ayant un ensemble compresseur (14) avec au moins une partie (210), de géométrie variable, une chambre de combustion (11) et un ensemble turbine (12, 13) le procédé comprenant :

   - l'élaboration d'une consigne (d*) debit de carburant à amener à la chambre de combustion (11) en fonction d'un régime souhaité de la turbine à gaz,
   - le calcul de valeurs de seuil pour maintenir la valeur de consigne (d*) de débit de carburant supérieure ou égale à une valeur limite minimale et inférieure ou égale à une valeur limite maximale, les valeurs de seuil étant fonction d'un état thermodynamique de la turbine à gaz, et
   - l'asservissement de la position de la partie (210) de géométrie variable par commande d'un actionneur en fonction de l'écart entre une information de position détectée (XGV) représentative de la position instantanée de la partie à géométrie variable et une information de position de consigne (XGV*), **caractérisé en ce que** :
   - les valeurs de seuil calculées sont des valeurs de richesse C/P où C est le débit de carburant à amener à la chambre de combustion et P est la pression en sortie de l'ensemble compresseur, et
   - les valeurs de seuil $(C/P_{min}', C/P_{max}'; C/P_{min}", C/P_{max}")$, sont ajustées automatiquement par calcul en temps réel en fonction de l'information de position détectée (XGV) représentative de la position instantanée de la partie (210) géométrie variable ou de l'écart entre cette information de position détectée (XGV) et l'information de position de consigne (XGV*).

**2.** Procédé selon la revendication 1, **caractérisé en ce que** les valeurs de seuil (C/P$_{min}$', C/P$_{max}$'; C/P$_{min}$", C/P$_{max}$"), sont calculées en fonction d'un état thermodynamique de la turbine à gaz auquel correspond la position de consigne (XGV*) la partie (210) de géométrie variable et sont corrigées en temps réel en fonction de l'écart entre la position détectée (XGV) et la position de consigne (XGV*) de la partie (210) de géométrie variable.

**3.** Procédé selon la revendication 1, **caractérisé en ce que** les valeurs de seuil (C/P$_{min}$', C/P$_{max}$'; C/P$_{min}$", C/P$_{max}$"), sont calculées en fonction d'un état thermodynamique de la turbine à gaz en prenant en compte directement la position détectée (XGV) (de la partie (210) de geometrie variable.

**4.** Procédé selon l'une quelconque des revendications 1 à 3, **caractérisé en ce que** la partie (210) de géométrie variable est l'une au moins parmi un ensemble d'aubes de stator à angle de calage variable et des vannes de prélèvement d'air dans l'ensemble compresseur (14).

**5.** Système de régulation d'une turbine à gaz (10) ayant un ensemble compresseur (14) avec au moins une partie (210) de géométrie variable, une chambre de combustion (11) et un ensemble turbine (12, 13), le système de régulation comprenant :

- un circuit (108, 110, 112) d'élaboration d'une consigne (C*) de débit de carburant à amener à la chambre de combustion (11) en fonction d'un régime souhaité de la turbine à gaz, le circuit d'élaboration de la consigne (C*) de débit de carburant comprenant un circuit (110) de calcul de valeurs de seuil pour maintenir la valeur de consigne (d*) de débit de carburant supérieure ou égale à une valeur limite minimale et inférieure ou égale à une valeur limite maximale, et
- un circuit d'asservissement de position de la partie (210) de géométrie variable comprenant un capteur de position (112) pour fournir une information représentative d'une position détectée (XGV) de la partie (210) de géométrie variable, un actionneur agissant sur la partie de géométrie variable pour commander sa position et un circuit (204, 206, 214) de commande de l'actionneur pour asservir la position de la partie (210) de géométrie variable à une position de consigne (XGV*),

**caractérisé en ce que** le circuit (110) de calcul de valeurs de seuil est agencé pour calculer des valeurs de seuil de richesse C/P où C est le débit de carburant à amener à la chambre de combustion et P est la pression en sortie de l'ensemble compresseur et est relié au circuit d'asservissement de la position de la partie, (210) de géométrie variable pour ajuster les valeurs de seuil(C/P$_{min}$', C/P$_{max}$'; C/P$_{min}$", C/P$_{max}$") automatiquement par calcul en temps réel en fonction de la position détectée (XGV) de la partie (210) de géométrie variable ou de l'écart entre la position détectée (XGV) et la position de consigne (XGV*).

**6.** Système selon la revendication 5, **caractérisé en ce que** le circuit (110) de calcul de valeurs de seuil (C/P$_{min}$', C/P$_{max}$'; C/P$_{min}$", C/P$_{max}$") est agencé pour calculer des valeurs de seuil (C/P$_{min}$', C/P$_{max}$'; C/P$_{min}$", C/P$_{max}$") en fonction d'un état thermodynamique de la turbine à gaz auquel correspond une position de consigne (XGV*) de la partie (210) de géométrie variable et pour corriger les valeurs de seuil calculées en fonction de l'écart entre la position détectée (XGV) et la position de consigne (XGV*) de la partie (210) de géometrie variable.

**7.** Système de régulation selon la revendication 5, **caractérisé en ce que** le circuit (110) de calcul de valeurs de seuil (C/P$_{min}$', C/P$_{max}$'; C/P$_{min}$", C/P$_{max}$") est agencé pour calculer des valeurs de seuil en fonction d'un état thermodynamique de la turbine à gaz en prenant en compte directement la position detectée (XGV) de la partie (210) de géométrie variable.

**8.** Système de régulation selon l'une quelconque des revendications 5 à 7, **caractérisé en ce que** le circuit (110) de calcul de valeurs de seuil (C/P$_{min}$', C/P$_{max}$'; C/P$_{min}$", C/P$_{max}$") est relié au moins à un circuit d'asservissement de position d'une partie (210) de géométrie variable choisie parmi un ensemble d'aubes de stators à angle de calage variable et des vannes de prélèvement d'air dans l'ensemble compresseur (14).

**9.** Turbine à gaz (10) équipée d'un système de régulation selon l'une quelconque des revendications 56 à 8.

**10.** Turbo-réacteur d'avion équipé d'un système de régulation selon l'une quelconque des revendications 5 à 8.

# EP 2 396 527 B1

## Claims

1. A method for controlling a gas turbine (10) having a compressor assembly (14) with at least one portion (210) of variable geometry, a combustion chamber (11) and a turbine assembly (12, 13), the method comprising:

   - generating a flow setpoint value (C*) for fuel to be fed to the combustion chamber (11) on the basis of a desired speed of the gas turbine,
   - computing threshold values for maintaining the fuel flow setpoint (C*) greater than or equal to a minimum limiting value and less than or equal to a maximum limit value, the threshold values depending on a thermodynamic state of the gas turbine, and
   - controlling of the position of the variable geometry portion (210) by controlling an actuator as a function of the difference between detected position information (XGV) representative of the instantaneous position of the variable geometry portion and setpoint position information (XGV*), **characterized in that**:
   - the computed threshold values are C/P Fuel Air Ratio values, where C is the fuel flow rate to be fed to the combustion chamber and P is the pressure at the outlet of the compressor assembly, and
   - the threshold values ($C/P_{min}'$, $C/P_{max}'$ ; $C/P_{min}''$, $C/P_{max}''$) are automatically adjusted by real time computing as a function of the detected position information (XGV) representative of the instantaneous position of the variable geometry portion (210) or of the difference between this detected position information (XGV) and the setpoint position information (XGV*).

2. The method according to claim 1, **characterized in that** the threshold values ($C/P_{min}'$, $C/P_{max}'$ ; $C/P_{min}''$, $C/P_{max}''$) are computed as a function of a thermodynamic state of the gas turbine to which corresponds the setpoint position (XGV*) of the variable position portion (210) and are corrected in real time as a function of the difference between the detected position (XGV) and the setpoint position (XGV*) of the variable geometry portion (210).

3. The method according to claim 1, **characterized in that** the threshold values ($C/P_{min}'$, $C/P_{max}'$ ; $C/P_{min}''$, $C/P_{max}''$) are computed as a function of a thermodynamic state of the gas turbine by directly taking into account the detected position (XGV) of the variable geometry portion (210).

4. The method according to any of claims 1 to 3, **characterized in that** the variable geometry portion (210) is at least one of an assembly of stator vanes with variable setting angle and valves for picking up air in the compressor assembly (14).

5. A system for controlling a gas turbine (10) having a compressor assembly (14) with at least one portion (210) of variable geometry, a combustion chamber (11) and a turbine assembly (12, 13), the control system comprising:

   - a circuit (108, 110, 112) for generating a flow setpoint value (C*) for fuel to be fed to the combustion chamber (11) as a function of a desired speed of the gas turbine, the circuit for generating the fuel flow setpoint value (C*) comprising a circuit (110) for computing threshold values in order to maintain the fuel flow setpoint value (C*) greater than or equal to a minimum limit value or less than or equal to a maximum limit value, and
   - a circuit for controlling the position of the variable geometry portion (210) comprising a position sensor (212) for providing information representative of a detected position (XGV) of the variable geometry portion (210), an actuator acting on the variable geometry portion in order to control its position and a circuit (204, 206, 214) for controlling the actuator for slaving the position of the variable geometry portion (210) on a setpoint position (XGV*),

   **characterized in that** the circuit (110) for computing threshold values is designed so as to compute C/P Fuel Air Ratio threshold values where C is the rate of fuel flow to be fed to the combustion chamber and P is the pressure at the outlet of the compressor assembly and is connected to the circuit for controlling the position of the variable geometry portion (210) in order to automatically adjust the threshold values ($C/P_{min}'$, $C/P_{max}'$ ; $C/P_{min}''$ $C/P_{max}''$) by real time computation as a function of the detected position (XGV) of the variable geometry portion (210) or of the difference between the detected position (XGV) and the setpoint position (XGV*).

6. The system according to claim 5, **characterized in that** the circuit (110) for computing threshold values ($C/P_{min}'$, $C/P_{max}'$ ; $C/P_{min}''$, $C/P_{max}''$) is designed so as to compute threshold values ($C/P_{min}'$, $C/P_{max}'$ ; $C/P_{min}''$, $C/P_{max}''$) as a function of a thermodynamic state of the gas turbine to which corresponds a setpoint position (XGV*) of the variable geometry portion (210) and to correct the computed threshold values according to the difference between the detected position (XGV) and the setpoint position (XGV*) of the variable geometry portion (210).

7. The control system according to claim 5, **characterized in that** the circuit (110) for computing threshold values (C/P$_{min'}$, C/P$_{max'}$; C/P$_{min''}$, C/P$_{max''}$) is designed for computing threshold values as a function of a thermodynamic state of the gas turbine by directly taking into account the detected position (XGV) of the variable geometry portion (210).

8. The control system according to any of claims 5 to 7, **characterized in that** the circuit (110) for computing threshold values (C/P$_{min'}$, C/P$_{max'}$ ; C/P$_{min''}$, C/P$_{max''}$) is connected to at least one circuit for controlling the position of a variable geometry portion (210) selected from an assembly of stator vanes with a variable setting angle and valves for picking up air in the compressor assembly (14).

9. A gas turbine (10) equipped with a control system according to any of claims 5 to 8.

10. An aircraft turbo-jet engine equipped with a control system according to any of claims 5 to 8.

**Patentansprüche**

1. Verfahren zur Regelung einer Gasturbine (10), die eine Verdichteranordnung (14) mit wenigstens einem Teil (210) mit veränderlicher Geometrie, eine Brennkammer (11) sowie eine Turbinenanordnung (12, 13) aufweist, wobei das Verfahren umfaßt:

   - das Erstellen eines Sollwertes (C*) für die der Brennkammer (11) in Abhängigkeit einer gewünschten Drehzahl der Gasturbine zuzuführende Treibstoffmenge,
   - das Berechnen von Schwellwerten, um den Sollwert (C*) der Treibstoffmenge oberhalb eines oder gleich einem minimalen Grenzwert(es) sowie unterhalb eines oder gleich einem maximalen Grenzwert(es) zu halten, wobei die Schwellwerte von einem thermodynamischen Zustand der Gasturbine abhängig sind, und
   - das Regeln der Position des Teils (210) mit veränderlicher Geometrie durch Steuern eines Aktors in Abhängigkeit der Abweichung zwischen einer erfaßten Positionsinformation (XGV), welche für die momentane Position des Teils mit veränderlicher Geometrie repräsentativ ist, und einer Sollpositionsinformation (XGV*), **dadurch gekennzeichnet, daß**:
   - die berechneten Schwellwerte Luftverhältnis-Werte C/P sind, wobei C die der Brennkammer zuzuführende Treibstoffmenge und P der Druck am Ausgang der Verdichteranordnung ist, und
   - die Schwellwerte (C/P$_{min'}$, C/P$_{max'}$; C/P$_{min''}$, C/P$_{max''}$) durch Echtzeitberechnung in Abhängigkeit der erfaßten Positionsinformation (XGV), welche für die momentane Position des Teils (210) mit veränderlicher Geometrie repräsentativ ist, oder der Abweichung zwischen dieser erfaßten Positionsinformation (XGV) und der Sollpositionsinformation (XGV*) automatisch eingestellt werden.

2. Verfahren nach Anspruch 1, **dadurch gekennzeichnet, daß** die Schwellwerte (C/P$_{min'}$, C/P$_{max'}$; C/P$_{min''}$, C/P$_{max''}$) in Abhängigkeit eines thermodynamischen Zustandes der Gasturbine, dem die Sollposition (XGV*) des Teils (210) mit veränderlicher Geometrie entspricht, berechnet werden und in Abhängigkeit der Abweichung zwischen der erfaßten Position (XGV) und der Sollposition (XGV*) des Teils (210) mit veränderlicher Geometrie in Echtzeit korrigiert werden.

3. Verfahren nach Anspruch 1, **dadurch gekennzeichnet, daß** die Schwellwerte (C/P$_{min'}$, C/P$_{max'}$; C/P$_{min''}$, C/Pmax'') in Abhängigkeit eines thermodynamischen Zustandes der Gasturbine unter direkter Berücksichtigung der erfaßten Position (XGV) des Teils (210) mit veränderlicher Geometrie berechnet werden.

4. Verfahren nach einem der Ansprüche 1 bis 3, **dadurch gekennzeichnet, daß** das Teil (210) mit veränderlicher Geometrie wenigstens eine(s) aus einer Anordnung von Leitschaufeln mit veränderlichem Anstellwinkel und der Ventile zur Entnahme von Luft aus der Verdichteranordnung (14) ist.

5. System zur Regelung einer Gasturbine (10), die eine Verdichteranordnung (14) mit wenigstens einem Teil (210) mit veränderlicher Geometrie, eine Brennkammer (11) sowie eine Turbinenanordnung (12, 13) aufweist, wobei das Regelungssystem umfaßt:

   - eine Schaltung (108, 110, 112) zum Erstellen eines Sollwertes (C*) für die der Brennkammer (11) in Abhängigkeit einer gewünschten Drehzahl der Gasturbine zuzuführende Treibstoffmenge, wobei die Schaltung zum Erstellen des Sollwertes (C*) für die Treibstoffmenge eine Schaltung (110) zur Berechnung von Schwellwerten, um den Sollwert (C*) der Treibstoffmenge oberhalb eines oder gleich einem minimalen Grenzwert(es) sowie unterhalb eines oder gleich einem maximalen Grenzwert(es) zu halten, umfaßt, und

- eine Schaltung zur Regelung der Position des Teils (210) mit veränderlicher Geometrie, die einen Positionsgeber (212), um eine Information, welche für eine erfaßte Position (XGV) des Teils (210) mit veränderlicher Geometrie repräsentativ ist, zu liefern, einen Aktor, der auf das Teil mit veränderlicher Geometrie wirkt, um dessen Position zu steuern, sowie eine Schaltung (204, 206, 214) zur Steuerung des Aktors, um die Position des Teils (210) mit veränderlicher Geometrie einer Sollposition (XGV*) zu unterwerfen, umfaßt,

**dadurch gekennzeichnet, daß** die Schaltung (110) zur Berechnung von Schwellwerten dazu eingerichtet ist, Luftverhältnis-Schwellwerte C/P zu berechnen, wobei C die der Brennkammer zuzuführende Treibstoffmenge und P der Druck am Ausgang der Verdichteranordnung ist, und mit der Schaltung zur Regelung der Position des Teils (210) mit veränderlicher Geometrie verbunden ist, um die Schwellwerte (C/P$_{min'}$, C/P$_{max'}$; C/P$_{min''}$, C/P$_{max''}$) durch Echtzeitberechnung in Abhängigkeit der erfaßten Position (XGV) des Teils (210) mit veränderlicher Geometrie oder der Abweichung zwischen der erfaßten Position (XGV) und der Sollposition (XGV*) automatisch einzustellen.

6. System nach Anspruch 5, **dadurch gekennzeichnet, daß** die Schaltung (110) zur Berechnung von Schwellwerten (C/P$_{min'}$, C/P$_{max'}$; C/P$_{min''}$, C/P$_{max''}$) dazu eingerichtet ist, Schwellwerte (C/P$_{min'}$, C/P$_{max'}$; C/P$_{min''}$, C/P$_{max''}$) in Abhängigkeit eines thermodynamischen Zustandes der Gasturbine, dem eine Sollposition (XGV*) des Teils (210) mit veränderlicher Geometrie entspricht, zu berechnen und um die berechneten Schwellwerte in Abhängigkeit der Abweichung zwischen der erfaßten Position (XGV) und der Sollposition (XGV*) des Teils (210) mit veränderlicher Geometrie zu korrigieren.

7. Regelungssystem nach Anspruch 5, **dadurch gekennzeichnet, daß** die Schaltung (110) zur Berechnung von Schwellwerten (C/P$_{min'}$, C/P$_{max'}$; C/P$_{min''}$, C/P$_{max''}$) dazu eingerichtet ist, Schwellwerte in Abhängigkeit eines thermodynamischen Zustandes der Gasturbine unter direkter Berücksichtigung der erfaßten Position (XGV) des Teils (210) mit veränderlicher Geometrie zu berechnen.

8. Regelungssystem nach einem der Ansprüche 5 bis 7, **dadurch gekennzeichnet, daß** die Schaltung (110) zur Berechnung von Schwellwerten (C/P$_{min''}$ C/P$_{max'}$; C/P$_{min''}$, C/P$_{max''}$) wenigstens mit einer Schaltung zur Regelung der Position eines Teils (210) mit veränderlicher Geometrie, das aus einer Anordnung von Leitschaufeln mit veränderlichem Anstellwinkel und Ventilen zur Entnahme von Luft aus der Verdichteranordnung (14) ausgewählt ist, verbunden ist.

9. Gasturbine (10), die mit einem Regelungssystem nach einem der Ansprüche 5 bis 8 ausgestattet ist.

10. Turbostrahltriebwerk eines Flugzeugs, das mit einem Regelungssystem nach einem der Ansprüche 5 bis 8 ausgestattet ist.

FIG.1

FIG.2

EP 2 396 527 B1

**FIG.3**

**FIG.4**

**FIG.5**

FIG.6

EP 2 396 527 B1

FIG.7

EP 2 396 527 B1

**RÉFÉRENCES CITÉES DANS LA DESCRIPTION**

**Documents brevets cités dans la description**

- WO 2009109446 A